# FASCICULE DE BREVET EUROPEEN

(11) **EP 2 714 612 B1**
(45) Date de publication et mention de la délivrance du brevet: **17.07.2019**
(21) Numéro de dépôt: 12731060.5
(22) Date de dépôt: 24.05.2012
(51) Int. Cl.: C04B 12/04, C04B 22/06, C04B 22/12, C04B 28/02, C09K 8/467, C04B 40/00

(54) **LIANT HYDRAULIQUE COMPRENANT UN ACCÉLÉRATEUR, SON UTILISATION ET PROCÉDÉ DE PRÉPARATION D'UN MATÉRIAU DE CONSTRUCTION**
HYDRAULISCHES BINDEMITTEL ENTHALTEND EINEN ABBINDEBSCHLEUNIGER, SEINE VERWENDUNG UND PROZESS ZUR HERSTELLUNG EINES KONSTRUKTIONSMATERIALS
HYDRAULIC BINDER COMPRISING AN ACCELERATOR, ITS APPLICATION AND PROCESS FOR PREPARATION OF A CONSTRUCTION MATERIAL

(30) Priorité: 26.05.2011 FR 1154584
(43) Date de publication de la demande: 09.04.2014
(73) Titulaire: Saint-Gobain Weber, 77170 Servon (FR)
(72) Inventeur: YAMMINE, Joumana, F-93110 Rosny-sous-Bois (FR); FAMY, Charlotte, F-94220 Charenton Le Pont (FR)
(74) Mandataire: Chantraine, Sylvie Hélène
(86) Numéro de dépôt international: PCT/FR2012/051172
(87) Numéro de publication internationale: WO 2012/160319

(56) Documents cités:
- EP-A2- 0 189 928
- CA-A- 1 084 683
- DE-A1- 2 232 240
- FR-A- 539 577
- FR-A- 1 427 942
- FR-A1- 2 559 146
- FR-A5- 2 091 340
- GB-A- 606 153
- US-A- 2 336 723
- US-A- 2 945 769
- US-A- 4 482 379
- US-A1- 2008 202 752

## Description

La présente invention concerne un nouvel accélérateur de prise d'un ciment, un liant hydraulique comprenant un ciment et cet accélérateur, ainsi que les matériaux de construction obtenus à partir de ce liant hydraulique tel qu'un béton ou un mortier ou une pâte.

Le ciment présente la particularité quand il est mélangé à de l'eau de faire prise et de durcir - même sous l'eau - par des processus de dissolution des composés anhydres et de précipitation d'hydrates. En présence d'eau, les particules de ciment se dissolvent en surface et libèrent des espèces ioniques, lesquelles réagissent entre elles pour former des hydrates, notamment des hydrates de silicate et de calcium, qui précipitent dans la solution interstitielle et provoquent le durcissement du matériau. Plus précisément, deux phénomènes successifs se produisent au cours de l'évolution de la pâte de ciment: la prise et le durcissement.

Dès le mélange du ciment avec l'eau appelée eau de gâchage, les particules anhydres du ciment se transforment en gels puis en précipités de microcristaux hydratés dont la composition varie en fonction des concentrations des espèces chimiques relarguées par les particules. Généralement une à deux heures après le début du gâchage, on observe une augmentation brusque de la viscosité accompagnée d'un dégagement de chaleur, qui caractérise le début de prise. L'épaississement de la pâte est provoqué par l'accroissement rapide de microcristaux ou de précipités d'hydrates. Le début de prise se mesure donc par le temps qui s'écoule entre le moment du gâchage et le moment précis où la pâte s'épaissit et devient plus visqueuse en même temps qu'elle s'échauffe par libération d'énergie. La fin de la prise correspond au moment où la pâte cesse d'être déformable et se transforme en un matériau rigide.

Le durcissement fait suite au phénomène de prise et correspond à la période pendant laquelle l'hydratation se poursuit. La résistance du matériau, encore faible à la fin de la prise, va augmenter tout au long du durcissement, rapidement au début, puis de plus en plus lentement. La résistance mécanique du matériau cimentaire continue généralement de croître pendant une très longue période, mais la valeur de la résistance à 28 jours reste une valeur de référence conventionnelle pour les ciments Portland.

Les accélérateurs de prise ou de durcissement peuvent être sous forme de solution aqueuse, de suspension aqueuse, ou de poudre. Cependant, dans certaines applications, et notamment pour les mortiers de réparation ou les produits vendus en batch sec, l'emploi d'un accélérateur sous forme liquide n'est pas possible. L'accélérateur de la présente invention est sous forme de poudre, si bien qu'il peut être mélangé au ciment à sec. Il n'est pas nécessaire de solubiliser l'accélérateur préalablement dans l'eau, et il n'est pas nécessaire de mouiller le ciment avant d'ajouter l'accélérateur. La préparation du mortier ou du béton s'en trouve considérablement simplifiée.

L'accélération de la prise et/ou du durcissement d'un ciment peut être obtenue par différents moyens, tels qu'un traitement thermique, l'utilisation d'accélérateurs chimiques ou une plus grande finesse du ciment. L'accélération chimique peut être généralement réalisée de deux façons : par addition de composés chimiques qui réagissent avec les particules de ciment, ou par incorporation de germes de cristallisation dans le ciment au moment du gâchage ou du broyage du ciment.

Le chlorure de calcium est par exemple connu comme accélérateur de durcissement des ciments de Portland et des ciments composés. Il est ajouté à raison de 2 % par rapport au poids du ciment et jusqu'à 3 % pour d'autres ciments de mélanges et des liants pouzzolaniques. D'autres accélérateurs sous forme de poudre qui se dissolvent dans l'eau sont: les carbonates alcalins et carbonates d'alcalino-terreux tels que le carbonate de calcium (FR 2810314); les silicates alcalins comme le silicate de sodium (US 2005/0268818), le silicate de potassium ou le silicate de lithium; les aluns de potassium; les sulfates d'alcalins et sulfates d'alcalino-terreux; les nitrates d'alcalins et les nitrates d'alcalino-terreux; les nitrites alcalins et alcalino-terreux; les sels d'hydroxydes d'alcalins, d'alcalino-terreux et métalliques; les sels de chlorure, les sels de formiate de calcium et d'aluminium; les thiocyanates alcalins et alcalino-terreux; les sulfates alcalins, alcalino-terreux et métalliques; les sulfites alcalins, alcalino-terreux et métalliques. L'utilisation d'un hydroxyde de calcium de faible granulométrie comme accélérateur de prise a par exemple été décrite dans le document WO 2006/111225.

Le second type d'accélérateur est constitué de germes de cristallisation comme les germes de silicates de calcium hydratés (en abrégé C-S-H) que l'on mélange au ciment au moment du gâchage (FR 1 213 645 et FR 1 276 696). Les germes de cristallisation déclenchent une précipitation cristalline: ils provoquent et orientent les cristallisations de manière à accélérer le durcissement et à accroître les résistances.

Plusieurs modes de préparation de germes de silicate de calcium ont été proposés. Ainsi, un hydrate de silicate de calcium de faible densité qui peut être ajouté au ciment sous forme de poudre a été décrit dans le document US 2002/0166479. Des germes de silicates de calcium hydratés de très faible granulométrie ont été également proposés sous forme de suspensions aqueuses (FR 2 708 592 et WO2010/26155). Mais ces germes sont instables, si bien qu'il devient nécessaire de les stabiliser par un polymère, ce qui en augmente le coût. Au surplus, les germes de C-S-H fabriqués ex-situ sont soumis à des problèmes de carbonatation et peuvent se désintégrer en donnant un gel de silice et du CaCO₃ du fait de la carbonatation.

Une troisième façon de provoquer l'accélération d'un ciment a été récemment proposée par Parker et al. (US 2009/0277357) en mettant en présence deux types de silices finement divisées et de la chaux vive ou hydratée, pour former des germes de cristallisation dans le système cimentaire pendant la prise. Cependant, un tel système ne produit pas une accélération de prise suffisante.

Il existe donc un besoin de proposer un accélérateur de prise d'un ciment qui provoque une meilleure accélération de la prise que les accélérateurs de l'art antérieur, qui soit stable, sous forme solide et peu coûteux.

Les alcanolamines, les silicates de sodium, la chaux, les carbonates, et l'aluminate de sodium ont déjà été utilisés comme accélérateurs de prise, notamment dans la demande FR 2 091 340.

L'association d'un silicate tel que le métasilicate de sodium, et d'un sel de calcium tel que le chlorure de calcium ou l'hydroxyde de calcium a déjà été proposé pour promouvoir la formation de silicate de calcium hydratés ou pour accélérer la prise de fibres de laine de roche (FR 2 559 146 et US 2 945 769).

US4482379A divulgue un liant hydraulique, pour la cimentation des puits de pétrole, comprenant un ciment hydraulique, un sel de chlorure divalent, du gypse, un retardeur de prise, de l'hydroxyléthylcellulose, un composé métasilicate de sodium, et de la chaux. FR539577A divulgue un liant hydraulique comprenant un ciment, un composé silicate et un sel de calcium. US2336723A divulgue un liant hydraulique comprenant du ciment, du chlorure de calcium, du silicate de sodium, de la terre de diatomée et du sulfate d'aluminium et du potassium. CA1084683A1 divulgue un liant hydraulique constitué d'un ciment, de chlorure de calcium, et de métasilicate de sodium.

Dans le cadre de la présente invention, il a été découvert de façon surprenante que l'association d'un sel de calcium et d'un silicate dans des proportions particulières provoque une accélération synergique de la prise du ciment, si bien que les effets de la combinaison des deux composés est bien supérieure à la simple somme des effets de chacun d'eux pris séparément. Il a en outre été découvert, qu'à des teneurs en sel de calcium et en silicate plus faibles que celles préconisées dans l'art antérieur, une amélioration des résistances du ciment à court terme se produit sans dégradation de ses propriétés à long terme.

La présente invention concerne un liant hydraulique hydraulique sous forme pulvérulente constitué d'un ciment, d'au moins un sel de calcium soluble dans l'eau, et d'au moins un composé silicate choisi parmi le silicate de sodium, le métasilicate de sodium, le silicate de potassium, le métasilicate de potassium, le silicate de lithium, le métasilicate de lithium et leurs mélanges.

Le mélange de composé de silicate et de sel de calcium selon l'invention est utilisé pour accélérer la prise et/ou le durcissement d'un ciment.

La teneur du sel de calcium peut aller de 0,1 à 3,5% en poids sec, de préférence de 0,5 à 3,5% en poids sec, par exemple de 1,5 à 3,5%, et de préférence encore de 1,5 à 3,0% en poids sec du poids du ciment.

Lorsque le sel de calcium est le chlorure de calcium, on préfère que sa teneur soit inférieure à 0,6% en poids sec du poids du ciment. En effet, le chlorure de calcium présente l'inconvénient d'être hygroscopique et de provoquer la corrosion d'armatures métalliques s'il est présent: en trop grande quantité dans un béton ou un mortier.

Les expressions de pourcentages en poids tel qu'elles sont utilisées dans la présente demande comprennent les bornes, « de x% à y% » étant équivalent à « allant de x% à y% ». Selon un mode de mise en oeuvre de l'invention, chacune de plages de valeurs peut être exprimée en excluant ses bornes.

La teneur du composé silicate peut aller de 0,1 à 3,5% en poids sec, de préférence de 0,5 à 3,5%, par exemple de 1,5 à 3,5%, et de préférence encore de 1,5 à 3,0% en poids sec du poids du ciment.

Lorsque le liant hydraulique contient plusieurs composés silicate, la somme des pourcentages des composés silicate correspond aux pourcentages donnés précédemment en référence à un seul composé silicate. De même, lorsque le liant hydraulique contient plusieurs sels de calcium, la somme des pourcentages des sels de calcium correspond aux pourcentages donnés précédemment en référence à un seul sel de calcium.

Selon un de ses aspects, la présente invention porte sur un liant hydraulique sous forme pulvérulente comprenant ou constitué d'un ciment, d'au moins un sel de calcium soluble dans l'eau, et d'au moins un composé silicate choisi parmi le silicate de sodium, le métasilicate de sodium, le silicate de potassium, le métasilicate de potassium, le silicate de lithium, le métasilicate de lithium et leurs mélanges,
- le composé silicate représentant de 0,1 à 3,5% en poids sec du poids du ciment, et
- le sel de calcium représentant de 0,1 à 3,5% en poids sec du poids du ciment. L'expression « de 0,1 à 3,5% en poids » telle qu'elle est utilisée dans le paragraphe précèdent s'entend de préférence bornes incluses, mais les bornes peuvent être exclues.

Le terme « comprenant » n'a pas le même sens que le terme « constitué de ». Dans le premier cas, le liant hydraulique peut contenir d'autres composés que le ciment, le composé de silicate et le sel de calcium. Dans le deuxième cas, la présence d'autres composés dans le liant est exclue.

Des teneurs en composé silicate et en sel de calcium supérieures à 3,5% en poids par rapport au poids du ciment peuvent provoquer une diminution de performance de résistance mécanique, notamment à long terme. Des quantités en composé silicate et en sel de calcium inférieures à 0,1% ne permettent pas d'observer une accélération de prise suffisante.

Selon un mode de réalisation de l'invention, le liant est constitué du ciment, du sel de calcium et du silicate, dans les teneurs décrites précédemment, tout autre additif accélérateur n'étant: pas nécessaire pour obtenir un temps de prise amélioré.

Dans l'expression « en poids sec du poids du ciment », on calcule le pourcentage par rapport au poids du ciment sec dépourvu de tout additif et d'eau. Le mot ciment est utilisé au sens strict.

Sans être lié par aucune théorie, on pense que le sel de calcium et le sel de silicate forment des germes de silicate de calcium hydraté (C-S-H) dans la solution interstitielle du ciment. L'accélérateur sous forme d'un mélange de poudres ajouté au ciment à sec avant le gâchage, ou dans l'eau de gâchage, permet de synthétiser très rapidement in situ des germes de silicates de calcium hydratés qui agissent comme nuclei et comme support de croissance à d'autres nouveaux C-S-H formés, ce qui accélère la germination et la cinétique d'hydratation du ciment.

L'une des deux poudres est un sel de calcium apportant des ions calcium, et l'autre est un silicate apportant des espèces silicatées SiO(OH)₃⁻. Lorsque ces deux poudres sont mélangées simultanément dans un pré-mélange de matériaux pulvérulents cimentaires constituant une formulation de mortier, ils produisent vraisemblablement lors du gâchage des hydrates purs de type C-S-H in situ dans la matrice cimentaire. La solubilisation rapide de ces poudres dans le milieu basique de la solution interstitielle du ciment permet d'avoir une nucléation rapide de C-S-H. La nucléation améliore aussi la cinétique de développement des propriétés mécaniques finales du matériau hydraté durci dérivant du ciment. Dans un ciment classique, de l'hydroxyde de calcium est libéré en quantité suffisante 6 à 8 heures après le début de la réaction de l'eau sur les phases C₃S du ciment et participe à la réaction pouzzoulanique. Dans le cadre de la présente invention, l'hydroxyde de calcium est disponible beaucoup plus tôt grâce à l'incorporation d'un sel de calcium, si bien que des germes de C-S-H se forment plus rapidement.

Le terme « accélérateur de prise » au sens de l'invention couvre un composé qui améliore la prise et/ou le durcissement d'un ciment, et qui est constitué du mélange d'au moins deux composés solides.

Le sel de calcium est avantageusement soluble dans l'eau et se dissout rapidement dans l'eau. On entend par dissolution rapide, la dissolution dans l'eau d'au moins 90% en poids du composé de calcium introduit à une concentration de 2 g/l, à une température de 20°C, en une durée de moins de 30 minutes, de préférence en moins de 10 minutes, de préférence encore en moins de 5 minutes, sans agitation. La dissolution complète du sel de calcium peut être constatée par des mesures de conductimétrie de la solution aqueuse.

Le sel de calcium peut être choisi parmi les sels organiques d'acides carboxyliques de calcium tels que le formiate de calcium, l'acétate de calcium, le citrate de calcium, le lactate de calcium, le gluconate de calcium, le tartrate de calcium, l'oxalate de calcium, le propionate de calcium, le stéarate de calcium; les sels inorganiques de calcium tels que le chlorure de calcium, le bromure de calcium, le fluorure de calcium, l'iodure de calcium, le chlorate de calcium, l'iodate de calcium, le phosphate de calcium, le nitrate de calcium , le nitrite de calcium, l'hypochlorure de calcium, le bicarbonate de calcium, le sulfure de calcium, l'oxyde de calcium, l'hydroxyde de calcium et leurs mélanges.

Le sel de calcium peut être choisi parmi le formiate de calcium, l'acétate de calcium, le citrate de calcium, le lactate de calcium, le gluconate de calcium, le tartrate de calcium, l'oxalate de calcium, le propionate de calcium, le stéarate de calcium, le bromure de calcium, le fluorure de calcium, l'iodure de calcium, le chlorate de calcium, l'iodate de calcium, le phosphate de calcium, le nitrate de calcium, le nitrite de calcium, l'hypochlorure de calcium, le bicarbonate de calcium, le sulfure de calcium, l'oxyde de calcium, l'hydroxyde de calcium et leurs mélanges.

Selon un autre de ses aspects, l'invention porte sur un liant hydraulique sous forme pulvérulente comprenant un ciment, au moins un sel de calcium soluble dans l'eau, et au moins un composé silicate,
- le sel de calcium étant choisi parmi le formiate de calcium, l'acétate de calcium, le citrate de calcium, le lactate de calcium, le gluconate de calcium, le tartrate de calcium, l'oxalate de calcium, le propionate de calcium, le stéarate de calcium, le bromure de calcium, le fluorure de calcium, l'iodure de calcium, le chlorate de calcium, l'iodate de calcium, le phosphate de calcium, le nitrate de calcium, le nitrite de calcium, l'hypochlorure de calcium, le bicarbonate de calcium, le sulfure de calcium, l'oxyde de calcium, l'hydroxyde de calcium et leurs mélanges,
- le composé silicate étant choisi parmi le silicate de sodium, le métasilicate de sodium, le silicate de potassium, le métasilicate de potassium, le silicate de lithium, le métasilicate de lithium et leurs mélanges,
- le composé silicate représentant de 2 à 5% en poids sec du poids du ciment, et
- le sel de calcium représentant de 2 à 7% en poids sec du poids du ciment.

On préfère l'hydroxyde de calcium comme sel de calcium.

Les caractéristiques qui ont été décrites en rapport avec le premier aspect de l'invention s'appliquent à ce deuxième aspect.

Dans le cadre de la présente invention, on préfère le nitrate de calcium ou l'hydroxyde de calcium, comme sel de calcium.

La granulométrie du sel de calcium est avantageusement comprise entre 20 et 1000 microns.

Le composé silicate peut être choisi parmi le silicate de sodium (ou silicate de soude), le métasilicate de sodium, le silicate de potassium, le métasilicate de potassium, le silicate de lithium, le métasilicate de lithium et leurs mélanges. Sa granulométrie est avantageusement comprise entre 20 et 1000 microns.

On distingue les silicates des métasilicates de sodium par leur teneur en Na₂O : le silicate de sodium contient jusqu'à 35% de Na₂O tandis que le métasilicate de sodium contient environ 50% de Na₂O.

Le composé silicate peut être choisi parmi les références commerciales Fischer Scientific, Cupanon® TR et Cupanon® Di de la société Van Baerle, et SS® 22 de la société PQ Corporation.

Selon un mode de réalisation, le sel de calcium est l'hydroxyde de calcium, et le composé de silicate est le silicate de sodium ou le métasilicate de sodium.

La quantité d'accélérateur, qui correspond à la somme des quantités de silicate et sel de calcium, sera choisie en fonction de la température à laquelle on souhaite réaliser le gâchage, du niveau de résistance ou de vitesse de prise souhaitée, et du type de ciment utilisé.

Le ratio massique entre le sel de calcium et le composé silicate est de préférence compris entre 0,2 et 2.

Selon un mode de mise en oeuvre, le ratio massique entre l'hydroxyde de calcium et le silicate est avantageusement compris entre 0,2 et 2, de préférence entre 1,1 et 1,8. Le ratio massique entre le chlorure de calcium et le silicate est avantageusement compris entre 0,4 et 2. Enfin, le ratio massique entre le nitrate de calcium et le silicate alcalin est avantageusement compris entre 0,4 et 2.

On entend par « ciment » au sens de l'invention, un ciment choisi parmi les ciments de Portland, les ciments Portland de mélange, les ciments alumineux, les ciments sulfo-alumineux, les ciments prompts naturels, les ciments magnésiens, une pouzzolane, ou un mélange binaire, ternaire ou quaternaire comprenant l'un de ces différents types de ciments.

Selon la norme EN 197-1, un ciment composé comprend un ciment Portland et un ou plusieurs matériaux alternatifs tels qu'une cendre volante siliceuse et calcique, un laitier de haut-fourneau, une pouzzolane naturelle, synthétique calcinée, une fumée de silice, un filler calcaire ou un schiste calciné, ou un métakaolin.

Les pouzzolanes sont des composés du type alumino-silicates ou siliceux ou calcium alumino-silicates comme les argiles calcinées, les pouzzolanes naturelles ou synthétiques calcinées, les cendres volcaniques naturelles ou calcinées, les kaolins, les métakaolins, les cendres volantes de centrales thermiques, les cendres volantes de biomasse, les fumées de silice, les farines de quartz, les cendres de cosse de riz, les laitiers de hauts-fourneaux, les composés totalement amorphes comme des verres sodo-calciques broyés à haute teneur en silice, les poudres de verre, les cendres volcaniques naturelles ou calcinées.

Le ciment selon l'invention comprend avantageusement du ciment de Portland ou un ciment de mélange.

Par « ciment Portland ou ciment de mélange», on désigne indifféremment tout ciment défini selon la norme EN 197-1 :2000. Toutes les combinaisons des ciments cités dans la norme EN 197-1:2000 sont également possibles pour préparer le ciment de l'invention. De préférence, le ciment Portland est sélectionné parmi au moins l'un des ciments suivants : un ciment Portland CEM I 52.5 N et R (norme EN 197-1:2000), et un ciment Portland CEM I 42.5 N et R (norme EN 197-1:2000), ciment Portland CEM I 32.5 N et R, et un ciment de mélange de type CEM II, III, IV ou V.

Le ciment de haut-fourneau consiste généralement en un mélange de 36 à 95% en poids de laitiers de hauts-fourneaux granulés broyés avec du clinker de ciment Portland: il est identifié sous la dénomination de ciment de classe CEM III/A-B-C.

Le ciment selon l'invention a de préférence une taille de particule inférieure à 100 µm. Son D50 (taille maximale de 50% en volume des particules de ciment) est inférieur à 50 µm, de préférence à 30 µm et de façon plus privilégiée de l'ordre de 5 à 20 µm. Le ciment selon l'invention peut avoir une masse volumique absolue supérieure ou égale à 2,6 g/cm³, et généralement une masse volumique absolue inférieure ou égale à 3,2 g/cm³.

La prise du ciment de l'invention provoquée par l'accélérateur décrit plus haut est exothermique. Le temps de début de prise peut donc être déterminé par calorimétrie isotherme. La courbe de calorimétrie isotherme donne le flux de chaleur dégagé par la réaction exothermique d'hydratation du ciment. Plus la cinétique de la réaction et la chaleur dégagée sont importants, plus le ciment est activé. Sur un diagramme de calorimétrie isotherme, le début de prise se traduira par un minimum de la courbe vers 1-2 heures, et l'effet d'un accélérateur de prise aura pour résultat de translater la courbe vers un temps plus court, tandis que l'effet d'un accélérateur de durcissement se traduira indépendamment de la valeur de cette abscisse, par un accroissement de la pente de la courbe après le début de prise.

Un deuxième objet de l'invention porte sur un matériau de construction obtenu à partir du ciment décrit précédemment tel qu'un béton, un mortier, un mortier pré-mélangé, un élément préfabriqué, une brique, une plaque, un bloc ou un panneau de revêtement. Les bétons, les mortiers, les mortiers pré-mélangés tels que les adhésifs pour carrelage, ou les éléments de construction, obtenus à partir du ciment de l'invention ont un temps de prise plus court.

Le ciment selon l'invention peut avantageusement être utilisé par exemple dans les applications suivantes : les bétons prêts à l'emploi, les bétons courants, les bétons de hautes performances, les colles à carrelage, les enduits de lissage et de ragréage, les enduits monocouches, les enduits de revêtements, les colles et enduits pour complexes isolants, les mortiers de réparation, les enduits de façade, les revêtements d'étanchéité, les chapes, les dallages pour sol et les éléments préfabriqués (comme un parpaing ou une plaque).

L'invention vise en particulier des mortiers ou des bétons obtenus avec le ciment décrit précédemment dont la résistance en compression est de l'ordre de 8 et 18 MPa à 48 heures pour un ciment Portland CEM I 42.5 respectivement du type Normal et Réactif ; et de 18 et 28 MPa à 48 heures pour un ciment Portland CEM I 52.5 respectivement du type Normal et Réactif, mesurées selon la norme EN 196-1. L'invention vise d'autres types d'applications comme les colles à carrelage dont les valeurs de résistance à l'adhérence sont comprises entre 0,5 et IMPa.

Les liants hydrauliques selon l'invention peuvent également être avantageusement incorporés dans tout type de mortier pré-mélangé, tels que des mortiers de fixation, et plus particulièrement des mortiers de jointoiement, des mortiers colles, des adhésifs et plus particulièrement des adhésifs pour carrelage ou carreau de céramique.

Le liant hydraulique selon la présente invention pris en mélange avec du sable, des gravillons, du gravier, des polymères et/ou d'autres additifs organiques, permettent également de préparer des mortier-colles et des adhésifs pour coller des matériaux de constructions du bâtiment. Pour sa part, le mortier de montage, addition d'un ou de plusieurs liants selon l'invention, de granulats, d'additifs et/ou d'adjuvants, est utilisé pour l'assemblage d'éléments de maçonnerie. Il peut être destiné à l'application à joints épais ou minces. Les mortiers ou bétons pré-mélangés selon l'invention peuvent également être des mortiers ou bétons pour chapes, et plus généralement tout type de mortier pour sol qui intègre notamment des enduits de lissage. Il peut également s'agir d'enduits du type béton projeté. Les mortiers ou bétons pré-mélangés selon l'invention peuvent aussi être des mortiers de réparation qui ont un rôle important pour les ouvrages. Ils permettent la remise en état de béton ou son remplacement partiel. On citera par exemple, des mortiers d'injection qui sont des fluides destinés aux comblements de fissures ou de cavités. Ces derniers sont généralement appliqués par injection sous pression. Les mortiers ou bétons pré-mélangés selon l'invention peuvent avantageusement être des mortiers de façade tels que des mortiers de ragréage, des sous-enduits, des monocouches, des mortiers de parements organiques et des compositions d'imperméabilisation et d'étanchéité. Les mortiers de ragréage selon l'invention sont avantageusement utilisés pour la finition d'un support (mur, sol, plafond, etc.) afin d'obtenir une surface plane et lisse.

Les mortiers de sous-enduits selon l'invention permettent avantageusement de réaliser au moins une couche intermédiaire d'un système d'enduit "multicouches".

Les mortiers monocouches s'appliquent en une couche qui peut remplir des fonctions d'imperméabilisation et de décoration. Les mortiers d'imperméabilisation et d'étanchéité selon la présente invention se caractérisent par leur résistance à l'eau de pluie, ce qui en fait d'excellents produits de protection contre les intempéries, ils sont donc des mortiers de choix pour une application sur les façades des bâtiments. Les mortiers pré-mélangés selon l'invention peuvent également être tout type d'enduit, ainsi que des crépis, pour un travail en intérieur ou en extérieur.

Typiquement les bétons ou mortiers pré-mélangés selon l'invention sont prêts à l'emploi et son avantageusement utilisés pour habiller les façades, pour réussir la pose d'élément préfabriqué, du carrelage ou encore de panneau de revêtement, et de manière générale pour construire et entretenir tout type d'ouvrage du bâtiment. Les panneaux ou planches de revêtement selon l'invention seront idéalement d'une épaisseur de 3 à 25 mm. Ils pourront de préférence être fabriqués par un mélange du liant hydraulique de l'invention avec des granulats, des charges ou autres, suivi d'une étape de durcissement puis d'une étape de découpe.

L'accélérateur ou le liant hydraulique selon l'invention peut être utilisé pour la réalisation d'éléments préfabriqués et pour les bétons réalisés sur les chantiers. II peut également être utilisé pour le durcissement des suspensions de ciment utilisées pour l'étanchement et la stabilisation des roches, des sols désagrégés et des terrains. L'accélérateur peut être utilisé dans un procédé de projection à sec ou de projection humide d'un mortier ou d'un béton.

Les compositions de béton ou mortier selon l'invention peuvent également comprendre des adjuvants tels que des plastifiants ou superplastifiants, par exemple des produits à base d'acides polycarboxyliques et de préférence d'éthers polycarboxyliques, des lignosulphonates, des polynaphtalènessulphonates, des superplastifiants à base de mélamines, des polyacrylates et/ou des copolymères vinyliques, typiquement dans des teneurs inférieures ou égale à 5% en poids total du poids sec du ciment. Elles peuvent également comprendre des polymères tels que des éthers de cellulose.

De même, les matériaux de construction contenant le ciment selon l'invention peuvent comprendre des agents ariti-moussants, des surfactants, des agents hydrophobes, des tensioactifs, des plastifiants ou superplastifiants, des rétenteurs d'eau, des entraineurs d'air, des agents de surface et/ou des inhibiteurs de corrosion, typiquement dans des teneurs inférieures ou égales à 5% en poids total du matériau de construction, notamment un béton ou un mortier.

La présente invention a pour troisième objet un procédé de préparation d'un matériau de construction tel que décrit précédemment consistant à : 1) mélanger à sec le ciment, le sel de calcium, le composé de silicate, éventuellement des granulats et des adjuvants, et à 2) hydrater le ciment en ajoutant de l'eau de gâchage. Les granulats ajoutés au mélange dépendent de la nature du matériau que l'on souhaite obtenir. Il s'agit généralement de graviers, de gravillons, de sables de nature dolomitique ou calcaire ou siliceuse ou silico-calcaire de différentes granulométries.

Le nouvel agent accélérateur selon l'invention peut être utilisé dans des conditions habituelles de températures et de pression (une température n'excédant pas 100 °C, le plus souvent inférieure à 70 °C, de l'ordre de 20-30°C, et une pression de l'ordre de grandeur de la pression atmosphérique).

Le rapport massique entre le poids d'eau de gâchage et le poids sec de ciment est compris en général entre 0,30 et 0,50 en fonction de l'application béton ou mortier. Pour certains matériaux du type mortiers monocouches, le ratio entre l'eau de gâchage et le ciment est environ de 1,8.

Selon un mode de préparation, on gâche le ciment et l'accélérateur qui ont été préalablement mélangés dans la centrale à béton. L'accélérateur peut aussi être ajouté au niveau du camion toupie avant le départ ou en cours de chemin, ou même sur le chantier juste avant le coulage du béton. L'accélérateur est de préférence ajouté au ciment à sec avant le gâchage

L'invention concerne également l'utilisation du composé silicate et du sel de calcium décrit précédemment en tant qu'accélérateur de prise d'un ciment, ou en tant qu'accélérateur de prise et de durcissement d'un ciment. L'invention concerne également l'utilisation du mélange accélérateur pour l'accélération de prise et éventuellement de durcissement d'un mortier ou d'un béton.

L'accélérateur peut être ajouté au ciment, au mortier ou au béton, sec ou gâché, en usine ou bien sur le chantier. L'apport peut s'effectuer dans le mélangeur, dans la pompe d'alimentation, la conduite d'alimentation, la buse de préhumidification, la buse de projection du mortier ou béton. L'accélérateur peut aussi être ajouté directement dans le mélange sec au moyen d'un mélangeur. Généralement, au cours de cette utilisation, la teneur en accélérateur par rapport au ciment est d'au moins 1 % en poids sec par rapport au poids du ciment.

Enfin, l'invention concerne un accélérateur de prise contenant un silicate et un sel de calcium permettant d'accélérer la prise d'un ciment de telle façon que le temps de prise est d'au plus 11 heures, de préférence d'au plus 10 heures, de préférence compris entre 6 et 10 heures. Le temps de prise peut être mesuré par une méthode de calorimétrie isotherme par la mesure de la chaleur dégagée par le matériau au cours du temps, le temps zéro correspondant à l'ajout d'eau de gâchage. Le temps de prise correspond par exemple au point d'inflexion de la courbe représentant la chaleur dégagée par quantité de pâte cimentaire hydratée (J/g de pâte), en fonction du temps.

La prise du ciment de l'invention peut être en outre accélérée par un apport externe de chaleur (par exemple par étuvage à haute température dans le cas des bétons préfabriqués).

La présente invention et ses avantages sont illustrés pas les exemples qui suivent.

### Exemple 1 : Accélération de prise d'un ciment

### a) Préparation du liant

On a préparé un ciment en mélangeant dans un malaxeur
- en poids d'un ciment Portland (CEM I) de référence Ciment Ultracem CEM I 52.5N CE CP2 NF fourni par la Société Calcia de d₅₀=20µm et de finesse Blaine égale à 3590cm²/g, et
- 30% en poids de poudre de verre sodo-calcique commercialisée par la société Poraver sous le nom commercial Mikrover® de d₅₀=20µm.

Le malaxeur utilisé est un Heidolph équipé d'un variateur de vitesse et d'une pâle de rotation.

Ensuite, on a mélangé à sec dans un bol une quantité de 100g de ciment de mélange préparé précédemment avec le mélange accélérateur de l'invention ou un seul des composés du mélange, de façon à obtenir une bonne homogénéité des poudres. La quantité et la composition du mélange accélérateur ou du composé sont détaillées dans les tableaux 1 et 2 ci-dessous. Le pourcentage de l'accélérateur ou du composé est en masse par rapport à la masse de ciment préparé précédemment.

Le temps de prise de la référence correspond au temps de prise du ciment de mélange préparé précédemment auquel aucun accélérateur n'a été ajouté.

Ensuite 40g d'eau ont été ajoutés au mélange de poudres, l'ensemble a subi un mélange à une vitesse de rotation de 300 tours/min durant 30 secondes, le temps d'obtenir une pâte homogène, puis à une vitesse de rotation de 2050 tours/min pendant 1 min 30 sec pour malaxer la pâte.

### b) Mesure du temps de prise

La pâte obtenue est introduite dans une ampoule scellée hermétiquement. Cette dernière est introduite dans un calorimètre isotherme TAM Air, régulé à 20°C, doté d'une ampoule de référence scellée hermétiquement contenant uniquement de l'eau. La masse d'eau contenue dans l'ampoule de référence est obtenue par un calcul qui prend en considération l'équilibre des enthalpies liées aux réactions exothermiques du mélange cimentaire. L'introduction de l'ampoule dans le calorimètre isotherme peut engendrer une perte d'équilibre thermique et énergétique du calorimètre ce qui engendre un premier pic au moment de l'introduction de l'ampoule et qui représente un artefact de mesure.

**Tableau 1**

| | Réf. | Comp. A | Comp. B | Comp. C | Comp. D | Comp. E | Comp. F | Comp. G |
|---|---|---|---|---|---|---|---|---|
| Accélérateur | (% massique) | | | | | | | |
| CaCl₂ | | 0,50% | | | | | | 0,50% |
| Ca(OH)₂ | | | 1,50% | | | 1,50% | 3,00% | |
| Na₂SiO₃ | | | | 1,50% | | | | |
| Fumée de silice¹ | | | | | 3,00% | 1,50% | 3,00% | 3,00% |

| | Temps de prise (heures) | | | | | | | |
|---|---|---|---|---|---|---|---|---|
| | 12,1 | 11,8 | 11,4 | 12,4 | 13,5 | 13,5 | 13,5 | 12,7 |

| | | | | | | | | |
|---|---|---|---|---|---|---|---|---|
| ¹ La fumée de silice utilisée est disponible dans le commerce auprès de la société Elkem : son d50 est inférieur à 5 microns et sa finesse Blaine est comprise entre 10000 et 35000 cm²/g. | | | | | | | | |

**Tableau 2**

| | Ex 1A | Ex 1B | Ex 1C | Ex 1D |
|---|---|---|---|---|
| Accélérateur | (% massique) | | | |
| CaCl₂ | | | 0,50% | 0,50% |
| Ca(OH)₂ | 1,50% | 3,00% | | |
| Na₂SiO₃ | 1,50% | 3,00% | 1,50% | 3,00% |

| | Temps de prise (heures) | | | |
|---|---|---|---|---|
| | 8,9 | 6,4 | 9,8 | 8,4 |

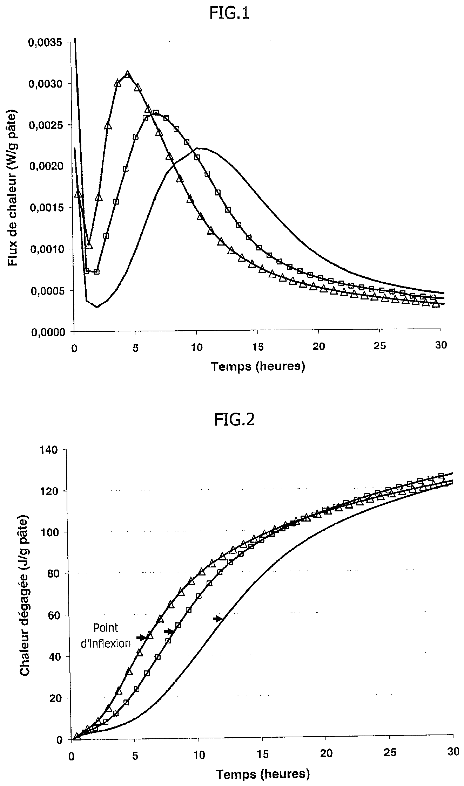

Le graphe de calorimétrie reproduit en Figure 2 permet de déterminer le temps de prise qui correspond au point d'inflexion de la courbe de chaleur (en Joules par rapport à la masse de pâte).

On observe que l'ajout simultané de silicate de sodium (Na₂SiO₃) et de sel de calcium soluble rapidement contribue grandement à l'accélération de la diffusion et de l'hydratation du ciment. En effet, l'ajout combiné d'un composé silicate avec un sel de calcium dans les exemples 1A, 1B, 1C et 1D donne un temps de prise plus court que l'ajout de l'un des composés seul selon les exemples comparatifs A, B, C et D. Il y a donc un effet synergique résultant du mélange combiné des deux composés.

Une autre source de silicate non conforme au silicate de l'invention telle qu'une fumée de silice en combinaison avec un sel de calcium soluble ne permet pas d'obtenir un effet accélérateur aussi élevé que celui obtenu avec le silicate de l'invention (voir les exemples comparatifs E, F et G).

Les courbes de flux de chaleurs (W/g pâte) du ciment seul (Référence) et du ciment auquel ont été ajoutés le mélange accélérateur composé de silicate de sodium et de chaux (exemples 1A et 1B) sont représentées sur la Figure 1.

Les courbes de chaleurs dégagées (J/g pâte) du ciment seul (Référence) et du ciment auquel ont été ajoutés le mélange accélérateur composé de silicate de sodium et de chaux (exemples 1A et 1B) sont représentées sur la Figure 2.

Dans les figures 1 et 2 :
- la composition contenant 30% de Mikrover et 70% de ciment Portland (Référence) est représentée par un trait lisse.
- la composition contenant 30% de Mikrover, 70% de ciment Portland avec le mélange d'accélérateurs 1,5% Ca(OH)₂ + 1,5% Na₂SiO₃(exemple 1A) est représentée par des « □ ».
- la composition contenant 30% de Mikrover, 70% de ciment Portland avec le mélange d'accélérateurs 3% Ca(OH)₂ + 3% Na₂SiO₃(exemple 1B) est représentée par des « Δ ».

### Exemple 2 :Mortiers

### a) Préparation de mortiers

On a préparé un mortier constitué de 2/3 de sable normalisé EN 196-1 (d₅₀=0,08 - 2 mm) et de 1/3 du liant hydraulique obtenu avec le ciment décrit dans l'exemple 1, selon le protocole de l'exemple 1, en faisant varier la composition de l'accélérateur utilisé. La composition des accélérateurs qui ont été utilisés est reportée dans les tableaux 3 et 4.

Le sable normalisé a été ajouté au mélange pulvérulent du ciment et de l'accélérateur à raison de 450 g de ciment pour 1350 g de sable normalisé Leucate (EN-196-1). Le mélange de poudres a été malaxé avec un appareil Rayneri équipé d'un batteur en acier inoxydable ayant les dimensions ainsi que des vitesses (petites avec rotation de 140 min⁻¹ et grandes avec des rotations de 285 min⁻¹) normalisées.

L'ensemble des matériaux pulvérulents a été mélangé à l'état sec durant 15 secondes. Ensuite, 225 mL d'eau ont été ajoutés durant le malaxage pour obtenir un rapport massique eau/ciment = 0,5. Le tout a été mélangé à la petite vitesse durant 30secondes, puis à grande vitesse durant 60secondes.

### b) Essais de résistance en compression

Des essais de résistance en compression ont été effectués selon la norme EN-196-1 sur ces mortiers.

Après malaxage mécanique, les mortiers ont été mis en place avec un appareil à choc (table) dans des moules contenant trois compartiments horizontaux permettant la préparation simultanée de trois éprouvettes prismatiques de section transversale de 40 x 40 x 160 mm.

Les éprouvettes ont été conservées pendant 24 heures en atmosphère humide (humidité relative supérieure à 90 %), puis démoulées et ensuite conservées dans des sacs plastiques hermétiquement scellés (et non pas dans l'eau, contrairement aux spécifications de la norme).

Après 1jour et 2joursde maturation, les éprouvettes ont été soumises à l'essai de flexion/compression sur une presse hydraulique normalisée selon la norme EN-196-1. La machine d'essai fournit une augmentation de charge de 50 N/s ± 10 N/s par flexion et 2 400 N/s ± 200 N/s par compression. La machine d'essai donne une valeur de résistance avec une erreur de justesse inférieure ou égale à ± 1,0 % de la charge enregistrée.

L'éprouvette a été brisée en deux moitiés par flexion (2 rouleaux d'appuis, espacement de 100 mm, un rouleau de chargement), et l'essai de compression a été réalisé sur chaque moitié.

Les valeurs de résistances en compression mesurées pour chacun des mortiers préparés précédemment après 1 jour et après 2 jours de maturation sont reportées dans les tableaux 3, 4 et 5.

Le témoin correspond au mortier auquel aucun accélérateur n'a été ajouté.

**Tableau 3**

| Echantillon | Témoin | Comp.1 | Comp.2 | Comp.3 | Comp.4 | Comp.5 |
|---|---|---|---|---|---|---|
| | Composés ajoutés (%massique) | | | | | |
| Ca(OH)₂ | | 5 | | 5 | 7 | 4 |
| Na₂SiO₃ | | | 5 | 5 | 5 | 3 |

| | Résistance mécanique en compression (MPa) | | | | | |
|---|---|---|---|---|---|---|
| 1 jour | 12,2 | 13,0 | 15,6 | 18,9 | 19,2 | 18,3 |
| 2 jours | 19,3 | 20,6 | 19,9 | 21,1 | 22,1 | 23,5 |
| 7 jours | 26,0 | 31,0 | 25 | 27,9 | 28,6 | 28,4 |
| 14 jours | 31,4 | 35,8 | 28,3 | 30,8 | 31,1 | 31,2 |
| 56 jours | 41,9 | 43,7 | 35,1 | 38,9 | 39,2 | 39,1 |

Les essais réalisés à titre comparatifs et regroupés dans le tableau 3 montrent que l'ajout de sels de calcium tels que la chaux avec le silicate de sodium à des teneurs supérieures à 3% permet d'obtenir de très bonnes résistances mécaniques à court terme mais que celles-ci sont dégradées à long terme (56 jours).

**Tableau 4**

| Echantillon | Comp.6 | Comp.7 | Comp.8 | Comp.9 | Ex.2A |
|---|---|---|---|---|---|
| Composés ajoutés (%massique) | | | | | |
| Ca(NO₃)₂ | 1 | | 1 | 3 | 1 |
| Na₂SiO₃ | | | | | 1,5 |
| Fumée de silice | | 3 | 3 | 3 | |

| Résistance mécanique en compression (MPa) | | | | | |
|---|---|---|---|---|---|
| 1 jour | 14,6 | 12,9 | 11,6 | 9,5 | 15,5 |
| 2 jours | 20,2 | 20,1 | 19,0 | 19,0 | 22,5 |
| 7 jours | 31 | 30,5 | 29,7 | 28,6 | 26,0 |
| 14 jours | 38,7 | 38 | 37,4 | 35,7 | 31,2 |
| 56 jours | 53,4 | 50,9 | 52,0 | 46,4 | 42,7 |

Dans le tableau 4, les exemples comparatifs 6, 7, 8 et 9 montrent que l'ajout simultané de fumée de silice avec le nitrate de calcium engendre une dégradation des résistances mécaniques à court terme (1 et 2 jours) par rapport au témoin, contrairement à l'échantillon Ex.2A selon l'invention. La cinétique de dissolution plus lente de la fumée de silice en comparaison à celle du silicate de sodium est en cause. L'apport tardif des espèces silicatées à long terme en combinaison avec les ions calcium disponibles se traduit par un gain mécanique à long terme, mais insuffisant à court terme.
Toutefois, l'échantillon Ex.2A selon la présente invention ne montre pas de dégradation des résistances mécaniques à long terme en comparaison avec la formule témoin (voir tableau 3).

**Tableau 5**

| Exemples | Comp.10 | Comp.11 | Comp.12 | Ex.2B |
|---|---|---|---|---|
| Composés ajoutés (%massique) | | | | |
| Ca(OH)₂ | 3 | | 3 | 3 |
| Na₂SiO₃ | | 3 | | 3 |
| Fumée de silice | | | 3 | |

| Résistance mécanique en compression (MPa) | | | | |
|---|---|---|---|---|
| 1 jour | 14,1 | 14,2 | 15,4 | 17,4 |
| 2 jours | 22,5 | 19,6 | 18,9 | 22,8 |
| 7 jours | 32,9 | 26,6 | 32,8 | 28,5 |
| 14 jours | 37,8 | 30,0 | 40,4 | 33,8 |
| 56 jours | 49,7 | 38,9 | 53,8 | 45,4 |

Dans le tableau 5, l'exemple comparatif Comp 12 montre que l'ajout de fumée de silice à la chaux engendre un gain mécanique à court terme mais celui-ci reste moindre que dans l'Ex2B avec l'ajout de silicate de sodium combiné à la chaux.

**Tableau 6**

| Exemples | Ex. 2C | Ex. 2D | Ex. 2E |
|---|---|---|---|
| Composés ajoutés (%massique) | | | |
| Ca(OH)₂ | 1,5 | 3 | |
| CaCl₂ | | | 0,5 |
| Na₂SiO₃ | 1,5 | 1,5 | 1,5 |

| Résistance mécanique en compression (MPa) | | | |
|---|---|---|---|
| 1 jour | 15,2 | 16,6 | 14,1 |
| 2 jours | 19,0 | 20,8 | 22,5 |
| 7 jours | 28,0 | 29,8 | 31,0 |
| 14 jours | 31,0 | 33,0 | 35,6 |
| 56 jours | 44,2 | 44,1 | 46,4 |

Les exemples selon la présente invention (combinaison du silicate de sodium avec un sel de calcium) montrent un effet synergique par rapport à l'ajout d'un seul composé dans les mêmes proportions massiques à 1 et à 2 jours et également un maintien, voire une amélioration des performances mécaniques à long terme (56 jours) par rapport à l'échantillon témoin.

Les échantillons testés conformes à la présente invention permettent d'avoir à la fois de bonnes performances à court terme (1 ou 2 jours) et à plus long terme (56 jours).

### Exemple 3 : Accélération de ciments de mélange

On a préparé un ciment en mélangeant 70% en poids d'un ciment de Portland (CEM I) et 30% en poids d'une charge que l'on fait varier.

On a ajouté au ciment de mélange préparé précédemment 1,5% en poids de Ca(OH)₂ et 1,5% en poids de Na₂SiO₃ par rapport à la masse de ciment.

On ajoute ensuite de l'eau au liant hydraulique sec constitué du mélange pulvérulent ciment-accélérateur dans une proportion massique eau/ciment=0,4 dans les conditions décrites dans l'exemple 1.

Le laitier est tel que son d₅₀= 30µm et sa finesse Blaine est égale à 4500 cm²/g.

**Tableau 6**

| | Ex. 3A | Ex. 3B | Ex. 3C | Ex. 3D | Ex. 3E | Ex. 3F |
|---|---|---|---|---|---|---|
| Ciment de mélange | % massique | | | | | |
| Ciment Portland (Ultracem) | 70 | 70 | 70 | 50 | 30 | 20 |
| Quartz fin | 30 | | | | | |
| Calcaire | | 30 | | | | |
| Laitier | | | 30 | 50 | 70 | 80 |
| Temps de prise du ciment seul (heures) | 13,7 | 12,3 | 13,3 | 13,9 | 17,0 | 19,0 |
| Temps de prise du ciment avec accélérateur (heures) | 10,5 | 9,9 | 10,4 | 10,3 | 11,2 | 11,9 |

La combinaison d'un composé silicate particulier et de chaux réduit le temps de prise quel que soit le type de charge ajoutée au ciment (quartz fin, filler calcaire ou laitier), et quel que soit le taux de substitution du ciment Portland Ultracem par un laitier à 30%, 50%, 70% et 80%.

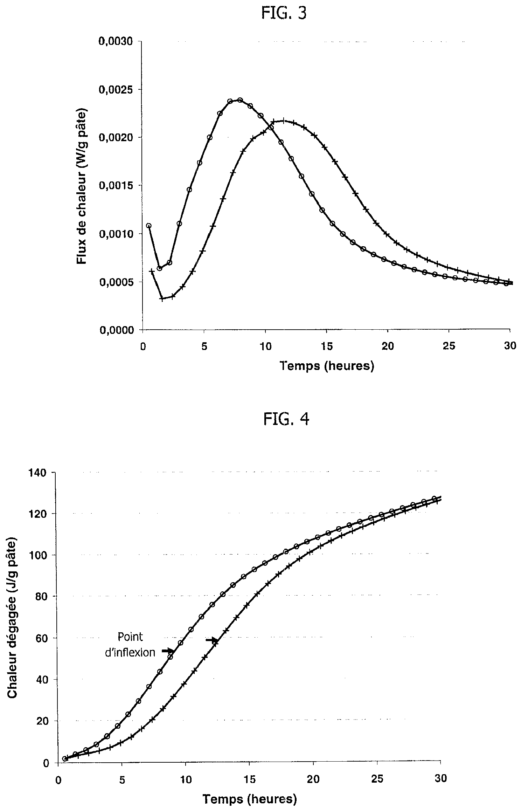

Les courbes de flux de chaleurs (W/g pâte) du ciment seul (exemple comparatif 3C) et du ciment auquel a été ajouté le mélange accélérateur composé de silicate et de chaux (exemple 3C) sont représentées sur la Figure 3.

Les courbes de chaleurs dégagées (J/g pâte) du ciment seul (exemple comparatif 3C) et du ciment auquel a été ajouté le mélange accélérateur composé de silicate et de chaux (exemple 3C) sont représentées sur la Figure 4.

Dans les figures 3 et 4 :
- les courbes correspondant au ciment contenant 30% de laitier et 70% de ciment Portland, sans accélérateur sont représentées par des « + ».
- les courbes correspondant au ciment contenant 30% de laitier et 70% de ciment Portland avec un accélérateur selon l'invention sont représentées par des « o ».

Le temps de prise est mesuré au point d'inflexion de la courbe de dégagement de chaleur sur la figure 4.

## Revendications

1. Liant hydraulique sous forme pulvérulente constitué d'un ciment, d'au moins un sel de calcium soluble dans l'eau, et d'au moins un composé silicate choisi parmi le silicate de sodium, le métasilicate de sodium, le silicate de potassium, le métasilicate de potassium, le silicate de lithium, le métasilicate de lithium et leurs mélanges,
- le composé silicate représentant de 0,1 à 3,5% en poids sec du poids du ciment, et
- le sel de calcium représentant de 0,1 à 3,5% en poids sec du poids du ciment.

2. Liant hydraulique selon la revendication 1, **caractérisée en ce que** le sel de calcium est choisi parmi le formiate de calcium, l'acétate de calcium, le citrate de calcium, le lactate de calcium, le gluconate de calcium, le tartrate de calcium, l'oxalate de calcium, le propionate de calcium, le stéarate de calcium, le chlorure de calcium, le bromure de calcium, le fluorure de calcium, l'iodure de calcium, le chlorate de calcium, l'iodate de calcium, le phosphate de calcium, le nitrate de calcium, le nitrite de calcium, l'hypochlorure de calcium, le bicarbonate de calcium, le sulfure de calcium, l'oxyde de calcium, l'hydroxyde de calcium et leurs mélanges.

3. Liant hydraulique selon la revendication 1 ou 2, **caractérisé en ce que** le sel de calcium est choisi parmi l'hydroxyde de calcium, le nitrate de calcium et leurs mélanges.

4. Liant hydraulique selon l'une des revendications précédentes, **caractérisé en ce que** le sel de calcium est l'hydroxyde de calcium, et le composé de silicate est le silicate de sodium ou le métasilicate de sodium.

5. Liant hydraulique selon l'une des revendications précédentes, **caractérisé en ce que** le ratio massique entre le sel de calcium et le composé silicate est de préférence compris entre 0,2 et 2.

6. Liant hydraulique selon l'une des revendications précédentes, **caractérisé en ce que** la granulométrie du sel de calcium est avantageusement comprise entre 20 et 1000 microns.

7. Liant hydraulique selon l'une des revendications précédentes, **caractérisé en ce que** la granulométrie du composé silicate est comprise entre 20 et 1000 microns.

8. Liant hydraulique selon l'une des revendications précédentes, **caractérisé en ce que** le composé silicate représente de 1,5 à 3,5% en poids sec du poids du ciment.

9. Liant hydraulique selon l'une des revendications précédentes, **caractérisé en ce que** le sel de calcium représente de 1,5 à 3,5% en poids sec du poids du ciment.

10. Liant hydraulique selon l'une des revendications précédentes, **caractérisé en ce que** le sel de calcium représente de 1,5 à 3,0% en poids sec du poids du ciment, et que le composé silicate représente de 1,5 à 3,0% en poids sec du poids du ciment.

11. Liant hydraulique selon l'une des revendications précédentes, **caractérisé en ce que** le ciment est choisi parmi les ciments de Portland, les ciments Portland de mélange, les ciments alumineux, les ciments sulfo-alumineux, les ciments prompts naturels, les ciments magnésiens, une pouzzolane, ou un mélange binaire, ternaire ou quaternaire comprenant l'un de ces différents types de ciments.

12. Utilisation du liant hydraulique de la revendication 1 pour la préparation d'un matériau de construction.

13. Matériau de construction renfermant un liant hydraulique selon l'une des revendications 1 à 11, tel qu'un béton, un mortier, un mortier pré-mélangé, un enduit, une colle, un élément préfabriqué, une brique, une plaque, un bloc ou un panneau de revêtement.

14. Procédé de préparation d'un matériau de construction selon la revendication 13, qui comprend
- le mélange à sec du ciment, du composé silicate choisi parmi le silicate de sodium, le métasilicate de sodium, le silicate de potassium, le métasilicate de potassium, le silicate de lithium, le métasilicate de lithium et leurs mélanges, et du sel de calcium soluble dans l'eau, le composé silicate représentant de 0,1 à 3,5% en poids sec du poids du ciment, et le sel de calcium représentant de 0,1 à 3,5% en poids sec du poids du ciment, puis
- l'ajout d'eau de gâchage dans une proportion massique comprise entre 0,30 et 1,8 par rapport au poids sec du mélange de ciment, de composé silicate et de sel de calcium.

## Patentansprüche

1. Hydraulisches Bindemittel in Pulverform, bestehend aus einem Zement, mindestens einem wasserlöslichen Calciumsalz und mindestens einer Silikatverbindung, ausgewählt aus Natriumsilikat, Natriummetasilikat, Kaliumsilikat, Kaliummetasilikat, Lithiumsilikat, Lithiummetasilikat und Mischungen davon, wobei
- die Silikatverbindung 0,1 bis 3,5 Trockengewichtsprozent des Zementgewichts ausmacht und
- das Calciumsalz 0,1 bis 3,5 Trockengewichtsprozent des Zementgewichts ausmacht.

2. Hydraulisches Bindemittel gemäß Anspruch 1, **dadurch gekennzeichnet, dass** das Calciumsalz ausgewählt ist aus Calciumformiat, Calciumacetat, Calciumcitrat, Calciumlaktat, Calciumgluconat, Calciumtartrat, Calciumoxalat, Calciumpropionat, Calciumstearat, Calciumchlorid, Calciumbromid, Calciumfluorid, Calciumjodid, Calciumchlorat, Calciumjodat, Calciumphosphat, Calciumnitrat, Calciumnitrit, Calciumhypochlorid, Calciumbicarbonat, Calciumsulfid, Calciumoxid, Calciumhydroxid und Mischungen davon.

3. Hydraulisches Bindemittel gemäß Anspruch 1 oder 2, **dadurch gekennzeichnet, dass** das Calciumsalz ausgewählt ist aus Calciumhydroxid, Calciumnitrat und Mischungen davon.

4. Hydraulisches Bindemittel gemäß einem der vorstehenden Ansprüche, **dadurch gekennzeichnet, dass** es sich bei dem Calciumsalz um Calciumhydroxid und bei der Silikatverbindung um Natriumsilikat oder Natriummetasilikat handelt.

5. Hydraulisches Bindemittel gemäß einem der vorstehenden Ansprüche, **dadurch gekennzeichnet, dass** das Massenverhältnis zwischen dem Calciumsalz und der Silikatverbindung vorzugsweise zwischen 0,2 und 2 liegt.

6. Hydraulisches Bindemittel gemäß einem der vorstehenden Ansprüche, **dadurch gekennzeichnet, dass** die Korngröße des Calciumsalzes vorzugsweise zwischen 20 und 1000 Mikrometern liegt.

7. Hydraulisches Bindemittel gemäß einem der vorstehenden Ansprüche, **dadurch gekennzeichnet, dass** die Korngröße der Silikatverbindung zwischen 20 und 1000 Mikrometern liegt.

8. Hydraulisches Bindemittel gemäß einem der vorstehenden Ansprüche, **dadurch gekennzeichnet, dass** die Silikatverbindung 1,5 bis 3,5 Trockengewichtsprozent des Zementgewichts ausmacht.

9. Hydraulisches Bindemittel gemäß einem der vorstehenden Ansprüche, **dadurch gekennzeichnet, dass** das Calciumsalz 1,5 bis 3,5 Trockengewichtsprozent des Zementgewichts ausmacht.

10. Hydraulisches Bindemittel gemäß einem der vorstehenden Ansprüche, **dadurch gekennzeichnet, dass** das Calciumsalz 1,5 bis 3,0 Trockengewichtsprozent des Zementgewichts und die Silikatverbindung 1,5 bis 3,0 Trockengewichtsprozent des Zementgewichts ausmacht.

11. Hydraulisches Bindemittel gemäß einem der vorstehenden Ansprüche, **dadurch gekennzeichnet, dass** der Zement ausgewählt ist aus Portlandzementen, Portland-Mischzementen, Aluminiumzementen, Talg-Aluminiumzementen, natürlichen Schnellzementen, Magnesiazementen, einem Puzzolan oder einer binären, ternären oder quaternären Mischung, die einen dieser verschiedenen Zementtypen umfasst.

12. Verwendung des hydraulischen Bindemittels gemäß Anspruch 1 zur Herstellung eines Baumaterials.

13. Baumaterial wie ein Beton, ein Mörtel, ein Fertigmörtel, ein Gips, ein Klebstoff, ein Fertigteil, ein Ziegel, eine Platte, ein Block oder eine Verkleidungsplatte, das ein hydraulisches Bindemittel gemäß einem der Ansprüche 1 bis 11 enthält.

14. Verfahren zur Herstellung eines Baumaterials gemäß Anspruch 13, umfassend
- Trockenmischen des Zements, der Silikatverbindung, ausgewählt aus Natriumsilikat, Natriummetasilikat, Kaliumsilikat, Kaliummetasilikat, Lithiumsilikat, Lithiummetasilikat und Mischungen davon, und des wasserlöslichen Calciumsalzes, wobei die Silikatverbindung 0,1 bis 3,5 Trockengewichtsprozent des Zementgewichts und das Calciumsalz 0,1 bis 3,5 Trockengewichtsprozent des Zementgewichts ausmacht, und dann
- Zugeben von Anrührwasser in einem Massenverhältnis zwischen 0,30 und 1,8 in Bezug auf das Trockengewicht der Mischung aus Zement, Silikatverbindung und Calciumsalz.

## Claims

1. An hydraulic binder in pulverulent form consisting of a cement, at least one water-soluble calcium salt, and at least one silicate compound selected from sodium silicate, sodium metasilicate, potassium silicate, potassium metasilicate, lithium silicate, lithium metasilicate and mixtures thereof,
- the silicate compound representing from 0.1 to 3.5% by dry weight of the weight of the cement, and
- the calcium salt representing from 0.1 to 3.5% by dry weight of the weight of the cement.

2. Hydraulic binder according to claim 1, **characterized in that** the calcium salt is chosen from calcium formate, calcium acetate, calcium citrate, calcium lactate, calcium gluconate, calcium tartrate, calcium oxalate, calcium propionate, calcium stearate, calcium chloride, calcium bromide, calcium fluoride, calcium iodide, calcium chlorate, calcium iodate, calcium phosphate, calcium nitrate, calcium nitrite, calcium hypochloride, calcium bicarbonate, calcium sulfide, calcium oxide, calcium hydroxide, and mixtures thereof.

3. Hydraulic binder according to claim 1 or 2, **characterized in that** the calcium salt is selected from calcium hydroxide, calcium nitrate and mixtures thereof.

4. Hydraulic binder according to one of the preceding claims, **characterized in that** the calcium salt is calcium hydroxide, and the silicate compound is sodium silicate or sodium metasilicate.

5. Hydraulic binder according to one of the preceding claims, **characterized in that** the mass ratio between the calcium salt and the silicate compound is preferably between 0.2 and 2.

6. Hydraulic binder according to one of the preceding claims, **characterized in that** the particle size of the calcium salt is advantageously between 20 and 1000 microns.

7. Hydraulic binder according to one of the preceding claims, **characterized in that** the particle size of the silicate compound is between 20 and 1000 microns.

8. Hydraulic binder according to one of the preceding claims, **characterized in that** the silicate compound is from 1.5 to 3.5% by dry weight of the weight of the cement.

9. Hydraulic binder according to one of the preceding claims, **characterized in that** calcium salt is from 1.5 to 3.5% by dry weight of the weight of the cement.

10. Hydraulic binder according to one of the preceding claims, **characterized in that** the calcium salt represents from 1.5 to 3.0% by dry weight of the weight of the cement, and that the silicate compound represents from 1.5 to 3.0% by dry weight of the weight of the cement.

11. Hydraulic binder according to one of the preceding claims, **characterized in that** the cement is selected from Portland cements, mixed Portland cements, aluminous cements, sulfo-aluminous cements, natural quick cements, magnesium cements, a pozzolan, or a binary, ternary or quaternary mixture comprising one of these different types of cements.

12. Use of the hydraulic binder according to claim 1, for the preparation of a building material.

13. A construction material comprising a hydraulic binder according to one of claims 1 to 11, such as a concrete, a mortar, a pre-mixed mortar, a coating, a glue, a prefabricated element, a brick, a plate, a block or a cladding board.

14. A method of preparing a building material according to claim 13, which comprises
- dry blending the cement, the silicate compound chosen from sodium silicate, sodium metasilicate, potassium silicate, potassium metasilicate, lithium silicate, lithium metasilicate and their mixtures, and the water-soluble calcium salt, the silicate compound representing from 0.1 to 3.5% by dry weight of the weight of the cement, and the calcium salt representing from 0.1 to 3.5% by dry weight of the cement weight, then
- adding mixing water in a mass proportion of between 0.30 and 1.8 relative to the dry weight of the mixture of cement, silicate compound and calcium salt.
